Europäisches Patentamt

European Patent Office

Office européen des brevets

(19)

(11)　EP 0 852 050 B1

(12)　FASCICULE DE BREVET EUROPEEN

(45) Date de publication et mention
de la délivrance du brevet:
**30.07.2003 Bulletin 2003/31**

(51) Int Cl.⁷: **G10K 11/16**

(86) Numéro de dépôt international:
**PCT/FR96/01471**

(21) Numéro de dépôt: **96932625.5**

(22) Date de dépôt: **20.09.1996**

(87) Numéro de publication internationale:
**WO 97/011451 (27.03.1997 Gazette 1997/14)**

(54) **PROCEDE D'ATTENUATION DES VIBRATIONS ET DE L'ONDE DE PRESSION RAYONNEE PAR UN MATERIAU**

VERFAHREN ZUR DÄMPFUNG VON SCHWINGUNGEN UND DER VON EINEM MATERIAL ABGESTRAHLTEN DRUCKWELLE

METHOD FOR DAMPING VIBRATION AND THE PRESSURE WAVE FROM A MATERIAL

(84) Etats contractants désignés:
**BE DE DK ES FI FR GB IT NL SE**

(30) Priorité: **21.09.1995 FR 9511243**

(43) Date de publication de la demande:
**08.07.1998 Bulletin 1998/28**

(73) Titulaire: **Artec Aerospace**
**31100 Toulouse (FR)**

(72) Inventeurs:
• **CAPDEPUY, Marc**
**F-31470 Fontenilles (FR)**
• **HADDAD, Florent**
**F-31400 Toulouse (FR)**
• **LE MEHAUTE, Alain**
**F-91190 Gif-sur-Yvette (FR)**

(74) Mandataire: **Célanie, Christian**
**Cabinet Célanie,**
**13 route de la Minière,**
**BP 214**
**78002 Versailles Cedex (FR)**

(56) Documents cités:
**DE-A- 1 622 072　　　US-A- 3 615 961**

## Description

### DOMAINE TECHNIQUE DE L'INVENTION

La présente invention concerne un procédé d'atténuation de l'amplitude des phénomènes vibratoires et de l'onde de pression rayonnée par un matériau soumis à des vibrations d'origine mécanique et / ou acoustique.

La présente invention concerne également le matériau réalisé en application du procédé objet de l'invention.

Lorsqu'une paroi est soit soumise à une onde de pression incidente, soit mise en vibration par des moyens mécaniques, l'onde de pression incidente, et/ou les vibrations se transmettent à travers la structure du matériau depuis la surface incidente jusqu'à sa surface rayonnante.

L'invention concerne aussi bien les ondes vibratoires et acoustiques que le domaine des ondes infrasonores et ultrasonores.

L'invention vise à réduire l'amplitude des ondes transmises en évitant à un système mécanique vibrant de générer une onde vibro-acoustique dans le milieu qui l'entoure, ou en séparant une onde bruyante d'une autre zone, soit pour isoler un appareil bruyant, soit pour protéger un système sensible contre les vibrations mécaniques induites par les ondes.

L'atténuation obtenue par l'invention peut aller jusqu'à quelques dizaines de décibels dans le cas des ondes acoustiques.

### ETAT DE LA TECHNIQUE

Pour diminuer l'énergie acoustique transmise par une paroi, plusieurs solutions connues sont utilisées à ce jour.

Le brevet US-A-3 615 961 décrit un procédé d'absorption des vibrations acoustiques consistant à recouvrir un support à l'aide d'un matériau contenant un liquide ou d'un matériau plastique. Le rôle de cette couche est de transformer les vibrations sonores en chaleur.Un dispisitif connu consite à augmenter la masse des parois séparant la source sonore de la zone à protéger.

Cette solution est efficace sur une large bande de fréquences. Un doublement de la masse de parois permet un gain d'environ 4 dB (décibels), mais nécessite un encombrement accru et un surplus de masse. Il est difficile d'utiliser cette solution lorsque des gains de plusieurs dizaines de dB sont recherchés.

Un autre moyen pour réaliser de fortes isolations acoustiques est le recours aux parois multiples. Par exemple, une paroi double composée d'une première paroi, d'un volume d'air ou d'un matériau souple et d'une seconde paroi. Une telle structure complexe permet d'améliorer l'isolation acoustique sans augmenter de façon trop importante la masse, si le matériau souple est de très faible densité. Toutefois, l'usage d'une telle structure complexe souple nécessite une épaisseur importante.

Il est également connu de faire usage de matériaux poreux pour réaliser une isolation accoustique. L'énergie contenue dans l'onde acoustique incidente est dissipée par augmentation de la viscosité apparente du milieu par rapport à l'air à l'intérieur des pores du matériau. Ce type de solution nécessite une bonne adéquation entre la taille des pores et les composantes fréquentielles principales présentes dans le spectre du bruit dont on veut éviter la transmission ou la réflexion. Cette solution implique aussi l'utilisation de structues relativement épaisses.

Un matériau à base de mousse peut être inséré entre deux plaques rigides. L'ensemble se comporte comme une structure isotrope dont l'effet technique sert exclusivement à absorber une partie des phénomènes vibratoires.

Une autre solution existe aussi pour diminuer les vibrations des structures pouvant être à l'origine d'un rayonnement acoustique, grâce à l'ajout sur les structures de plaques de matériaux viscoélastiques permettant l'amortissement des structures. Cette solution entraîne un surplus de masse pour des performances limitées.

### OBJET DE L'INVENTION

Un premier objet de l'invention consiste à élaborer un procédé permettant d'obtenir une atténuation vibro-acoustique très importante grâce à un matériau composite de faible densité.

Un deuxième objet de l'invention consiste à réaliser des isolations acoustiques très importantes pour une masse supllémentaire relativement faible.

Un troisième objet de l'invention consiste à éviter la mise en vibration du matériau d'une structure.

A cet effet, l'invention concerne un procédé d'atténuation de l'amplitude des vibrations et de l'onde de pression rayonnée par un matériau soumis à des vibrations d'origine mécanique et/ou acoustique par l'intermédiaire de sa surface incidente sur laquelle l'onde incidente est réfléchie ou sa surface rayonnante par laquelle l'onde incidente est transmise, caractérisé en ce qu'on utilise un matériau composé d'une structure élastique pesante de conformation anisotrope, ayant une géométrie interne apte à réaliser une déviation et une localisation des vibrations internes à la structure.

Selon une caractéristique de l'invention, la modification du sens de vibration de l'onde s'effectue depuis un sens principalement perpendiculaire à la surface incidente jusqu'à un sens principalement parallèle ou voisin d'une parallèle de la surface rayonnante.

Selon une autre caractéristique du procédé, le sens des vibrations de l'onde est transformé de linéaire en rotatif ne générant pas d'onde acoustique.

Suivant une autre caractéristique du procédé, la modification de la nature des vibrations (direction, rotation, amplitude) peut être utilisée, pour que des déplacements relatifs spécifiques internes au matériau puissent permettre la conversion de l'énergie en une autre forme d'énergie.

Suivant une autre caractéristique de l'invention, la structure interne du matériau entre la surface incidente et la surface rayonnante est constituée par la combinaison par assemblage et / ou superposition et / ou juxtaposition de motifs géométriques en plusieurs dimensions conférant à la structure du matériau une architecture dissymétrique.

## DESCRIPTION DES FIGURES

D'autres avantages et caractéristiques de l'invention apparaîtront à la lecture de la description ci-après de formes de réalisations de l'invention données à titre d'exemples explicatifs illustrés par les dessins joints dans lesquels:

- la figure 1 est une vue schématique du principe de transmission d'une onde à travers un matériau;
- la figure 2 est un schéma illustrant une forme de réalisation du procédé objet de l'invention;
- la figure 3 représente un exemple de réalisation d'un matériau mettant en oeuvre le procédé objet de l'invention;
- la figure 4 représente la propagation de l'onde dans le cas d'un exemple de réalisation représenté à la figure 3;
- la figure 5 représente un autre exemple de réalisation d'un matériau mettant en oeuvre le procédé objet de l'invention;
- les figures 6 et 7 représentent deux autres formes de réalisations de l'invention;
- la figure 8 est une vue de détail à échelle agrandie de la figure 7.

## DESCRIPTION D'UN MODE DE REALISATION PREFERENTIEL

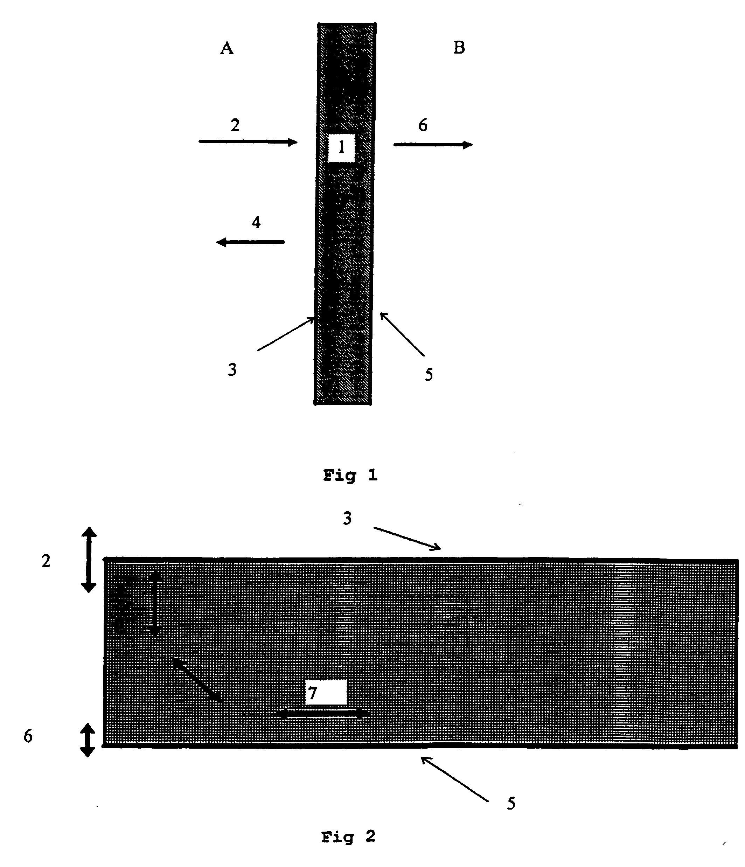

Sur la figure 1 est représenté schématiquement le principe de transmission d'une onde de pression entre deux milieux A et B, séparés par un matériau 1 qui peut être une paroi dont la structure interne est anisotrope.

L'invention s'applique aux ondes vibratoires de pression sonores, ultrasonores ou infrasonores; l'onde sonore énoncée dans la présente description n'est donnée qu'à titre d'exemple.

L'onde sonore émise en A génère une pression incidente dont le sens est représenté par la flèche 2.

Cette onde est partiellement réfléchie par la surface incidente 3 (flèche 4), et est transmise à travers la structure interne du matériau 1, qu'elle met en vibration jusqu'à la surface rayonnante 5, dont la vibration est transmise au milieu B (flèche 6).

Selon la masse et l'épaisseur de la paroi du matériau 1, l'onde transmise sera plus ou moins atténuée. L'onde transmise par la surface rayonnante 5 peut être générée non par une onde sonore émise en A, mais par une mise en vibration mécanique du matériau 1 susceptible de générer une onde de pression.

Le procédé selon l'invention a pour objet l'atténuation de l'onde de pression générée par la surface rayonnante 5 du matériau 1 soumis à des vibrations 2, d'origine mécanique et / ou acoustique, au niveau de la surface incidente 3, ledit matériau étant composé d'une structure élastique pesante de conformation anisotrope. Par matériau à structure élastique, on entend un matériau dont les particules génèrent des efforts proportionnels aux déplacements relatifs qui leur sont imposés.

Lorsqu'un tel matériau est soumis à des efforts susceptibles de varier au cours du temps, et provenant de sollicitations mécaniques ou d'une onde de pression, les surfaces du matériau répondent par des mouvements qui génèrent des ondes de pression, éventuellement sonores, qui sont rayonnées par lesdites surfaces. Selon le procédé objet de l'invention, une conformation adaptée de la géométrie interne du matériau permet d'obtenir une déviation de l'onde, avec localisation des vibrations et / ou modification des directions des vibrations dans la structure.

Comme représenté schématiquement en figure 2, les vibrations 2 initiales qui ont une direction sensiblement perpendiculaire à la surface incidente 3, sont déviées progressivement par la géométrie de la structure anisotrope du matériau 1 jusqu'à une direction schématisée par la flèche 7 sensiblement parallèle de la surface rayonnante 5, la transmission du milieu A au milieu B étant de ce fait très sensiblement atténuée (flèche 6).

Cette déviation est obtenue par une conformation adaptée de la structure ou microstructure du matériau 1 qui transforme des mouvements superficiels de la surface incidente 3, ou des contraintes surfaciques dues à la pression d'une onde de pression 2, en des déformations complexes internes à la partie anisotrope du matériau. Les déformations complexes de la structure interne du matériau 1 sont telles qu'elles minimisent la génération par la surface d'une onde acoustique dans une région de l'espace que l'on cherche à protéger.

A titre d'exemple, cette invention peut être appliquée en déviant d'un angle prédéterminé la direction de l'onde vibratoire 2 en transformant la translation des particules de la surface du matériau exposée à la source de vibrations (acoustique et / ou mécanique) en des mouvements dans une ou des directions différentes d'autres particules de la structure du matériau qui ne génèrent pas d'onde acoustique transmise au niveau de la zone à protéger.

Les zones d'interface du matériau 1 susceptibles de générer une onde sonore sont ainsi supprimées. En effet, les ondes sonores sont engendrées par une translation de surfaces solides perpendiculaire au contact avec le milieu aérien.

L'invention permet de convertir les translations de particules en rotations locales de celle-ci. Les zones du matériau qui sont le siège de rotations internes convertissent ainsi l'énergie acoustique en énergie cinétique et élastique interne, sans émission d'onde acoustique. Cette invention repose sur le contrôle des degrés de liberté internes des particules constituant la structure interne du matériau.

Le comportement physique auquel répond le matériau 1, peut être modélisé par les équations suivantes; si on note x le vecteur d'état des degrés de liberté des particules constituant le matériau (tant intérieurs que surfaciques), le comportement de la structure élastique pesante du matériau 1 peut être modélisé par une équation différentielle du type:

$$(M).(d^2x/dt^2) + (F).(dx/dt) + (K)x = (S).(P) + (A)$$

avec (M), (F), (K), (S) des matrices dépendant de la structure et de la géométrie de la structure interne, (P) vecteur de pression vibro-acoustique générée par la surface du matériau, et (A) vecteur dépendant de la sollicitation imposée au matériau (acoustique et / ou mécanique). A partir de cette équation différentielle, il est possible d'obtenir la fonction de transfert entre l'onde vibro-acoustique (P) générée par le matériau et la sollicitation appliquée (A); le changement de direction des vibrations passe par l'optimisation de cette fonction de transfert.

L'optimisation de la micro-géométrie interne et la nature du matériau permettent une diminution de l'énergie rayonnée par l'onde vibro-acoustique (P).

Selon l'invention, la structure interne du matériau entre la surface incidente 3 et la surface rayonnante 5, est composée d'une combinaison, par juxtaposition ou superposition ou emboîtement transversal ou longitudinal de motifs géométriques pluridimensionnels qui réalise une structure anisotrope dissymétrique, c'est à dire présentant suivant l'un quelconque de ses axes des motifs pleins dissymétriques, et des cavités dissymétriques qui contribuent à perturber la transmission de l'onde.

L'élément dénommé motif dans la présente description est un corps géométrique entrant dans la composition de la structure du matériau. Ce corps a au moins deux dimensions, et peut être formé par des assemblages de poutres, de barres, de volumes pleins, de surfaces planes ou de formes plus complexes.

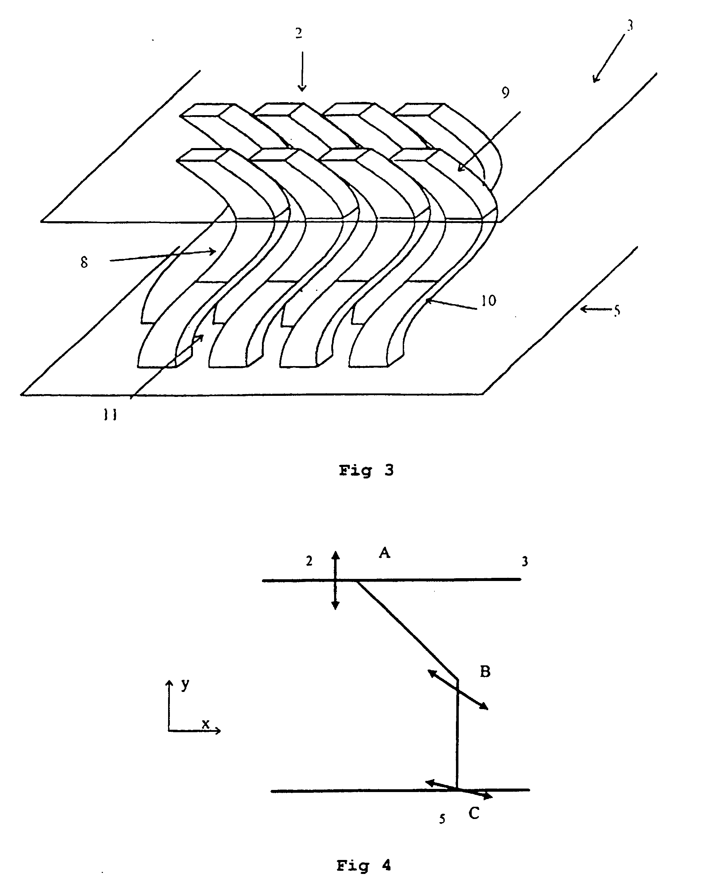

En figure 3 est représenté un exemple de réalisation de motifs constituant la structure d'un tel matériau entre surface incidente 3 et surface rayonnante 5. Chacun des motifs 8 en forme de poutre est au contact de la surface incidente 3 et de la surface rayonnante 5, et présente deux parties 9 et 10 inclinées et incurvées en sens inverse l'une par rapport à l'autre, et formant un angle entre elles. Les motifs 8 sont incurvés en sorte d'être dissymétriques par rapport à au moins un plan parallèle à la direction de l'onde de pression incidente. La partie 9 du motif forme un angle aigu avec la surface incidente 3, la partie 10 du motif est cintrée à son extrémité suivant un rayon.

Le motif 8 est répété et combiné par juxtaposition autant de fois que souhaité entre les surfaces 3 et 5, avec un intervalle entre chacun des dits motifs définissant des cavités 11 qui sont comme les motifs eux-mêmes également dissymétriques.

En figure 4 est représentée schématiquement le parcours et la déviation de l'onde de pression 2, par exemple dans le cas du matériau de la figure 3. Les vibrations de l'onde schématisée par la flèche 2 et perpendiculaire à la surface incidente 3, sont déviées par le motif 8 pour s'orienter comme schématisé par la flèche 12, indiquant la direction principale des vibrations au point intermédiaire B du motif 8. Les particules situées au milieu du motif 8 au point B répondent en effet aux sollicitations de l'onde de pression par des mouvements dont la direction est proche de celle de l'axe X.

La surface rayonnante 5 est alors soumise à des faibles mouvements selon Y qui sont majoritairement responsables de l'onde, dont la propagation passe d'un sens sensiblement parallèle à la surface rayonnante 5 ou faiblement sécant à celle-ci, avec une déviation en rotation au niveau du point B. Les motifs 8 sont le siège des vibrations, et les particules constitutives sont animées à la fois de translations et aussi de rotations autour des différents axes dépendant des formes de motifs.

La conception de motifs particuliers permet de privilégier les rotations des particules entraînant diverses torsions des motifs concernés avec une possibilité de concentration des vibrations. L'avantage des rotations sur les translations est le faible rayonnement acoustique des motifs.

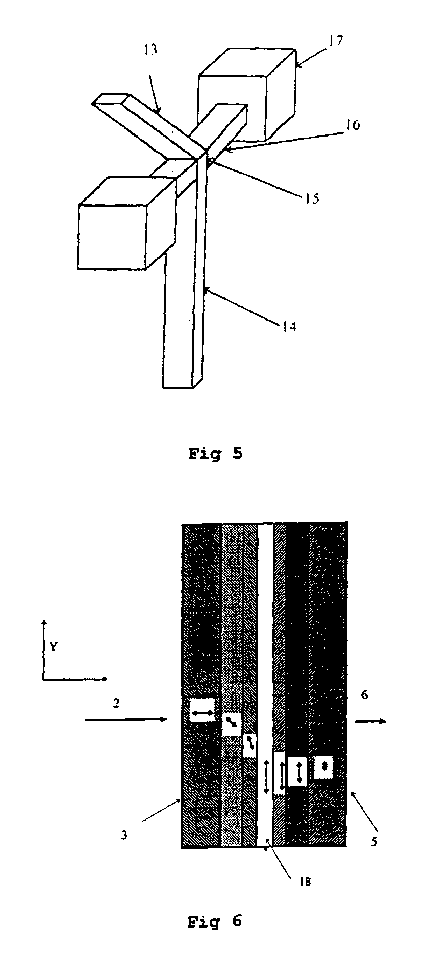

En figure 5 est représentée une autre forme de réalisation du motif tridimensionnel composé de poutres et de volumes ponctuels pleins. Le motif comprend une poutre inclinée 13 qui touche la surface incidente (non représentée) suivie d'une poutre 14 formant un angle obtus avec la poutre 13, et en contact avec la surface rayonnante 5 (non représentée).

Au point 15 de raccordement des poutres 13 et 14 sont fixées des poutres transversales 16 associées à des masses 17 qui fonctionnent comme accumulateur de vibrations. Suivant l'épaisseur du matériau, qui peut par exemple aller de deux centimètres d'épaisseur à quelques millimètres, la structure du matériau peut par exemple être réalisée par découpe au laser, par collage, pliage, assemblage de plusieurs couches ou par stéréolitnographie (polymérisation de résine par laser).

L'application présentée à la figure 6 consiste à réaliser une dissipation de l'énergie des vibrations 2 en ajoutant un maténau viscoélastique dans des zones 18 où l'énergie de l'onde vibratoire est concentrée par la micro-géométrie du matériau. La structure du matériau permet de dévier et de privilégier un ou des degrés de liberté du matériau pour lequel l'amortissement viscoélastique est le plus efficace. L'application de l'invention permet donc de dévier l'énergie de l'onde vibratoire 2, puis de la dissiper sous forme de chaleur dans des zones bien définies et selon des directions qui impliquent certains modes de vibration de la paroi non acoustiquement rayonnante.

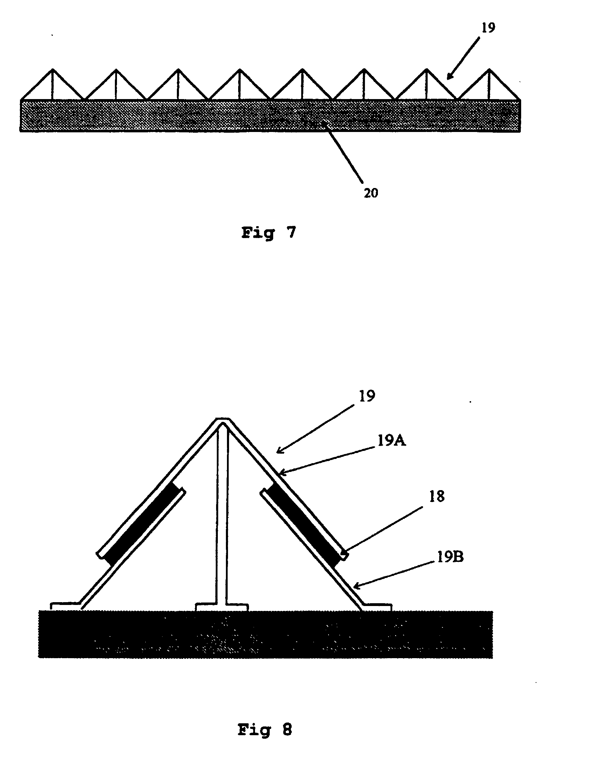

En référence aux figures 7 et 8, le matériau composite anisotrope 18 peut être ajouté sur une structure 19 sujette à un comportement vibro-acoustique jugé néfaste. Les propriétés internes du matériau composite 18 influencent la réponse vibratoire de la structure 19 positionnée sur une base 20 dont on cherche à amortir les vibrations.

Cet effet d'amortissement est obtenu en utilisant la propriété de la structure du matériau 18 qui dévie et modifie l'amplitude des vibrations internes. Cette modification permet à un ou des matériaux de la structure composite 18 de convertir l'énergie vibratoire en une autre forme d'énergie. Sur la figure 8, le matériau 18 convertisseur de l'énergie est agencé entre deux plaques 19A, et 19B de la structure 19. Le matériau 18 peut être formé à titre d'exemple par des éléments viscoélastiques, piézoactifs ou magnétostrictifs. Ces éléments convertissent alors l'énergie vibratoire en énergie thermique ou électrique.

## Revendications

1. Procédé d'atténuation de l'amplitude des vibrations et de l'onde de pression (6) rayonnée par un matériau soumis à des vibrations d'origine mécanique et/ou acoustique par l'intermédiaire de sa surface incidente (3) sur laquelle l'onde incidente est réfléchie ou sa surface rayonnante (5) par laquelle l'onde incidente est transmise, **caractérisé en ce qu'**on utilise un matériau composé d'une structure élastique pesante de conformation anisotrope, ayant une géométrie interne apte à réaliser une déviation et une localisation des vibrations internes (7) à la structure.

2. Procédé d'atténuation selon la revendication 1, **caractérisé en ce que** la modification du sens des vibrations internes s'effectue depuis un sens principalement perpendiculaire à la surface incidente (3) jusqu'à un sens sensiblement parallèle ou voisin d'une parallèle de la surface rayonnante (5).

3. Procédé d'atténuation selon la revendication 1, **caractérisé en ce que** la modification du sens des vibrations internes s'effectue par une transformation d'un mouvement linéaire en un mouvement rotatif.

4. Procédé d'atténuation selon la revendication 1, **ca-**

**ractérisé en ce que** le matériau (1) est constitué par une pluralité de motifs (8) internes géométriques combinés entre eux pour former une structure anistrope dissymétrique contribuant à pertuber les ondes vibro-acoustiques.

5. Procédé d'atténuation selon la revendication 1 ou 3, **caractérisé en ce que** la strucutre interne du matériau est dissymétrique par rapport à au moins un plan parallèle à la direction de l'onde de vibration incidente (2).

6. Procédé d'atténuation selon la revendication 1, **caractérisé en ce que** la modification des directions et amplitudes des vibrations internes permet l'augmentation de la dissipation de l'énergie par l'adjonction locale d'un matériau spécifique réalisant la conversion de l'énergie vibratoire en une autre forme d'énergie, notamment électrique ou thermique.

7. Matériau pour l'atténuation de l'amplitude des vibrations et de l'onde de pression (6) rayonnée par un matériau soumis à des vibrations d'origine mécanique et/ou acoustique par l'intermédiaire de sa surface incidente (3) sur laquelle l'onde incidente est réfléchie ou sa surface rayonnante (5) par laquelle l'onde incidente est transmise, **caractérisé en ce qu'**il comporte une structure élastique pesante de coformation anisotrope, ayant une géométrie interne spécifique apte à réaliser une déviation des vibrations présentes dans la structure, et à localiser ces vibrations dans des zones précises de ladite structure.

8. Matériau selon la revendication 7, **caractérisé en ce que** la strucure interne est dissymétrique par rapport à au moins un plan parallèle à la direction de l'onde de vibration incidente.

9. Matériau selon la revendication 7, **caractérisé en ce que** la structure du matériau est constituée de motifs (8) ayant des parties (9,10) inclinées formant un angle entre elles, et en contact avec la surface incidente (3) et la surface rayonnante (5).

10. Matériau selon la revendication 9, **caractérisé en ce qu'**au moins une des parties (10) est inclinée par rapport à la surface incidente (3) du matériau ou à la surface rayonnante (5).

11. Matériau selon la revendication 9, **caractérisé en ce que** les motifs (8) sont réalisés par assemblage d'une pluralité de poutres (13,14,16), dont certaines sont reliées à des masses (17) agencées de façon à concentrer les vibrations.

12. Matériau selon la revendication 7, **caractérisé en ce que** les motifs de la structure (19) sont placés en parallèle avec une base (20) rigide dont on veut atténuer le comportement vibro-acoustique, ladite structure étant équipée d'un matériau spécifique réalisant la conversion de l'énergie vibratoire en une autre forme d'énergie.

13. Matériau selon la revendication 12, **caractérisé en ce que** le matériau renferme des éléments piézoactifs, magnétostrictifs, ou viscoélastiques, agencés entre des plaques rigides à mouvement relatif appartenant à la dite structure.

**Patentansprüche**

1. Verfahren zur Dämpfung der Amplitude von Schwingungen und der Druckwelle (6), die von einem Material ausgestrahlt wird, das Schwingungen mechanischen und/oder akustischen Ursprungs mittels seiner Auftrefffläche (3), auf der die auftretende Welle reflektiert wird oder seiner Strahlfläche (5), von der die auftretende Welle übertragen wird, unterworfen ist, **dadurch gekennzeichnet, dass** ein Material verwendet wird, das aus einer elastischen, schwerfälligen Struktur mit anisotroper Konfiguration, welche eine innere Geometrie aufweist, die geeignet ist, eine Ablenkung und eine Festlegung der inneren Schwingungen (7) auf die Struktur zu bewerkstelligen, zusammengesetzt ist.

2. Verfahren zur Dämpfung nach Anspruch 1, **dadurch gekennzeichnet, dass** die Veränderung der inneren Schwingungsrichtung von einer zur Auftrefffläche (3) senkrechten Hauptrichtung aus bis hin zu einer zur Strahlfläche (5) parallelen oder zu einer Parallelen der Strahlfläche (5) angrenzenden Hauptrichtung erfolgt.

3. Verfahren zur Dämpfung nach Anspruch 1, **dadurch gekennzeichnet, dass** die Veränderung der inneren Schwingungsrichtung durch die Umwandlung einer linearen Bewegung in eine Drehbewegung erfolgt.

4. Verfahren zur Dämpfung nach Anspruch 1, **dadurch gekennzeichnet, dass** das Material (1) aus mehreren inneren geometrischen Mustern (8) zusammengesetzt wird, die zwischen sich kombiniert werden, um eine anisotrope, asymmetrische Struktur zu bilden, die dazu beiträgt, die schwingungsakustischen Welle zu stören.

5. Verfahren zur Dämpfung nach Anspruch 1 oder 3, **dadurch gekennzeichnet, dass** die innere Struktur des Materials in Bezug auf wenigstens eine zur Richtung der auftretenden Schwingungswelle (2) parallelen Ebene asymmetrisch ist.

6. Verfahren zur Dämpfung nach Anspruch 1, **dadurch gekennzeichnet, dass** die Veränderung der Richtungen und Amplitude der inneren Schwingungen die Erhöhung der Auflösung von Energie ermöglicht, indem ein spezifisches Material lokal hinzugefügt wird, damit die Umwandlung von Schwingungsenergie in eine andere Form von Energie, insbesondere thermische oder elektrische Energie, verwirklicht wird.

7. Material zur Dämpfung der Amplitude von Schwingungen und der Druckwelle (6), die von einem Material ausgestrahlt wird, das Schwingungen mechanischen und/oder akustischen Ursprungs mittels seiner Auftrefffläche (3), auf der die auftretende Welle reflektiert wird oder seiner Strahlfläche (5), von der die auftretende Welle übertragen wird, unterworfen ist, **dadurch gekennzeichnet, dass** es aus einer elastischen, schwerfälligen Struktur mit anisotroper Konfiguration, welche eine innere spezifische Geometrie aufweist, die geeignet ist, eine Ablenkung der in der Struktur vorhandenen Schwingungen zu bewerkstelligen und diese Schwingungen in definierte Bereiche der genannten Struktur festzulegen, zusammengesetzt ist.

8. Material nach Anspruch 7, **dadurch gekennzeichnet, dass** die innere Struktur in Bezug auf wenigstens eine zur Richtung der auftretenden Schwingungswelle parallelen Ebene asymmetrisch ist.

9. Material nach Anspruch 7, **dadurch gekennzeichnet, dass** die Struktur des Materials aus Mustern (8) zusammengesetzt wird, die geneigte Abschnitte (9, 10) aufweisen, indem sie einen Winkel zwischen sich bilden und mit der Auftrefffläche (3) und der Strahlfläche (5) in Kontakt stehen.

10. Material nach Anspruch 9, **dadurch gekennzeichnet, dass** wenigstens ein der Abschnitte (9, 10) in Bezug auf die Auftrefffläche (3) des Materials oder der Strahlfläche (5) geneigt ist.

11. Material nach Anspruch 9, **dadurch gekennzeichnet, dass** die Muster (8) durch Zusammensetzung von mehreren Trägern (13, 14, 16) gebildet werden, wo manche Trägern mit Massen (17) verbunden sind, die so angeordnet sind, um die Schwingungen zu konzentrieren.

12. Material nach Anspruch 7, **dadurch gekennzeichnet, dass** die Muster der Struktur (19) auf einer starren Basis (20) parallel angeordnet sind, welches schwingungs-akustische Verhalten zu dämpfen ist, indem die genannte Struktur mit einer spezifischen Material zusammengesetzt ist, um die Umwandlung von Schwingungsenergie in eine andere Form von Energie zu verwirklichen.

**13.** Material nach Anspruch 12, **dadurch gekennzeichnet, dass** das Material durch piezo-aktive, magnetostriktive oder viskoselastische Elemente gebildet wird, die zwischen starre Platten, welche der genannten Struktur gehörigen, mit relativen Verschiebungen angeordnet sind.

**Claims**

**1.** A process to damp the amplitude of the vibrations and the pressure wave (6) radiated by a material exposed to vibrations of mechanical and/or acoustic origin, by means of its incident surface (3) upon which the incident wave is reflected or its radiating surface (5) by which the incident wave is transmitted, **characterized in that** a material is used composed of an anisotropically-shaped heavy resilient structure having an internal geometry able to deviate and localize the internal vibrations (7) of the structure.

**2.** A damping process according to Claim 1, **characterized in that** the modification of the direction of the internal vibrations is carried out from a substantially perpendicular direction to the incident surface (3) to a substantially parallel or close to parallel direction to the radiating surface (5).

**3.** A damping process according to Claim 1, **characterized in that** the modification of the direction of the internal vibrations is carried out by transforming a linear movement into a rotating movement.

**4.** A damping process according to Claim 1, **characterized in that** the material (1) is formed by a plurality of internal geometric structural units (8) combined together to form an asymmetrical anisotropical structure helping to disturb the vibro-acoustic waves.

**5.** A damping process according to Claim 1 or 3, **characterized in that** the internal structure of the material is asymmetrical with respect to at least one plane parallel to the direction of the incident vibratory wave (2).

**6.** A damping process according to Claim 1, **characterized in that** the modification in direction and amplitudes of the internal vibrations enables an increase in the dissipated of the vibratory energy by locally applying a specific material which converts the vibratory energy into another form of energy, notably electrical energy or heat.

**7.** A material to damp the amplitude of the vibrations and pressure wave (6) radiated by a material exposed to vibrations of a mechanical and/or acoustic origin, by means of its incident surface (3) upon which the incident wave is reflected or its radiating surface (5) by which the incident wave is transmitted, **characterized in that** it incorporates an anisotropically-shaped heavy resilient structure having an internal specific geometry able to deviate the vibrations (7) internal to the structure and to localize these vibrations in specific area of said structure.

**8.** A material according to Claim 7, **characterized in that** the inner structure is asymmetrical with respect to at least one plane parallel to the direction of the incident vibratory wave.

**9.** A material according to Claim 7, **characterized in that** the material structure is formed of structural units (8) having parts (9,10) which are inclined and together form an angle, and are in contact with incident surface (3) and radiating surface (5).

**10.** A material according to Claim 9, **characterized in that** at least one of the parts (10) is inclined with respect to the incident surface (3) of the material or with respect to the radiating surface (5).

**11.** A material according to Claim 9, **characterized in that** the structural units (8) are made by assembly a plurality of beams (13, 14, 16), certain of which are connected to masses (17) arranged so as to concentrate the vibrations.

**12.** A material according to Claim 7, **characterized in that** the structural units of the structure (19) are placed in parallel to a rigid base (20), whose vibro-acoustic behaviour is to be damped, said structure being equipped with a specific material converting the vibratory energy into another form of energy.

**13.** A material according to Claim 12, **characterized in that** the material encloses piezoactive, magnetostrictive, or viscoelastic elements arranged between relative movement rigid plates belonging to said structure.

A                                    B

2 →                                → 6

1

4 ←

3                    5

**Fig 1**

3

2 ↕                    7

6 ↕                    5

**Fig 2**

Fig 3

Fig 4

**Fig 5**

**Fig 6**

**Fig 7**

**Fig 8**